# EUROPEAN PATENT SPECIFICATION

(11) **EP 3 082 399 B1**
(45) Date of publication and mention of the grant of the patent: **14.02.2018**
(21) Application number: 14812178.3
(22) Date of filing: 08.12.2014
(51) Int. Cl.: A01D 78/10

(54) **AGRICULTURAL RAKE**
LANDWIRTSCHAFTLICHE RAKE
RÂTEAU AGRICOLE

(30) Priority: 20.12.2013 GB 201322779
(43) Date of publication of application: 26.10.2016
(73) Proprietor: Agco Feucht GmbH, DE-90537 Feucht (DE)
(72) Inventor: RIEDEL, Jüergen, 90537 Feucht (DE)
(74) Representative: AGCO Intellectual Property Department
(86) International application number: PCT/EP2014/076893
(87) International publication number: WO 2015/091058

(56) References cited:
- EP-A1- 0 954 956
- US-A1- 2013 312 383

## Description

The invention relates to agricultural forage windrowers and particularly rakes with two or more rotors that rotate about respective vertical axes and support a plurality of tines.

Agricultural rakes generally comprise a frame, ground engaging wheels for supporting the frame on the ground, and at least one rotor which is driven in rotation about a vertical rotor axis. In use the frame is attached to the rear of an agricultural tractor by means of a drawbar and towing hitch for example. A torque is transferred from a power take-off (PTO) stub on the tractor to the rotors by a drive train.

Each rotor comprises a hub and a plurality of tine arms extending radially from the hub. Crop engaging tines are attached to the radially outermost ends of the arms for raking or windrowing cut forage material laying on the ground. To engage and release the crop material, the tines are respectively lowered and raised at predetermined positions around the rotary circumferential path. To effect this lowering and raising the innermost end of each tine arm is slideably engaged in a cam track. As the rotor rotates rollers on the arms move along the circular cam track which serves to twists the tine arms on their respective axes, thus raising and lowering the tines. Such an arrangement is present on rakes marketed by the applicant today under the brand "Fella", including model TS9060.

The working height of a rotor above ground is maintained by a rotor running gear comprised of one or more support wheels mounted below the hub. The support wheels protrude below the lowest position of tine to prevent the tines from striking the ground, which could otherwise result in damage to the tines and/or soil contamination of the forage material. The optimum working height may vary depending on factors such as the type of forage material and underlying terrain, and it is known to provide a height adjustment mechanism to extend or retract the support wheels relative to the hub. Such a mechanism may comprise a simple manually operated mechanical lever, or a more complex electrical or hydraulic actuator arrangement that may be adjusted from the tractor cab.

Various rotor configurations are available on the market ranging from single-rotor rakes to four-rotor rakes which have an operating width in excess of 12 metres. It is known to exploit a folding mechanism to provide a headland mode in which the rotors are partially folded upwards when making turns on the headland. Advantageously, this reduces the width of the machine temporarily thus reducing the space required to make the turn. Most models further include a transport mode in which the rotors fold into an upright position thus reducing the overall width of the machine. This is a particular issue for road transport: many countries have statutory limits on the width of implements that may be towed on the open road without requiring additional escort vehicles or police accompaniment. In the United Kingdom, the unescorted width limit is 3.0m.
EP 0954 956 A1 discloses a rake having a support structure and ground engaging wheels and at least one lateral arm which is articulated to the support structure. The lateral arm carries at least one rotor which is provided with tines and rotor wheels. The rotor is provided with an adjustment system to limit movement of the rotor as the rotor wheels travel over ground.

It is an object of the invention to provide an improved control system for an agricultural rake.

In accordance with a first aspect of the invention there is provided an agricultural rake comprising a frame, ground engaging wheels for supporting the frame on the ground, and at least two rotors each of which is driven in rotation about a respective vertical rotor axis and mounted to the frame by a folding linkage that permits folding movement of each rotor between a working position and a raised position around a longitudinal axis;
each rotor comprising a hub, a plurality of tine arms extending substantially radially from the hub and having crop engaging tines attached to the radially outermost ends thereof, and a rotor running gear comprising at least one ground engaging guide wheel mounted inwardly of the tines below the hub to a height adjustment mechanism;
the rake further comprising a control system coupled with each height adjustment mechanism and arranged to automatically retract each ground engaging guide wheel towards its respective hub when the respective rotor is moved to the raised position.

Also in accordance with the present invention there is provided a method of operating an agricultural rake having at least two rotors each of which is driven in rotation about a respective vertical rotor axis and mounted to a frame by a folding linkage that permits folding movement of each rotor between a working position and a raised position around a longitudinal axis;
wherein each rotor comprises a hub, a plurality of tine arms extending substantially radially from the hub with crop engaging tines attached to the radially outermost ends thereof, and a rotor running gear comprising at least one ground engaging guide wheel mounted inwardly of the tines below the hub to a height adjustment mechanism;
the method comprising automatically retracting each ground engaging guide wheel towards its respective hub when the respective rotor is moved to the raised position.

With the ground engaging wheels retracted, preferably to a position within the cylindrical space bounded by the tines, the outside width of the rake is reduced. This is of benefit especially for larger rakes which may otherwise struggle to comply with unescorted width limitations. For smaller rakes the retraction enables greater separation of the raised rotors, giving greater space available between for the mounting of hubs and linkages to raise the rotors.

The hydraulic circuit may be configured to position the rotor in one of a plurality of pre-set positions including the working position, a headland position and a transport position, and may suitably be arranged to retract the ground engaging wheels when entering a transport position but not to do so for a headland.

Embodiments of the invention will now be described, by way of example only, and with reference to the appended drawings in which:
Figure 1 is a plan view of a twin rotor agricultural rake;
Figure 2 is an end view of an agricultural rake with rotors raised and rotor ground engaging wheels in an operating position;
Figure 3 shows the rake of Figure 2 with the rotor ground engaging wheels retracted to a transport position; and
Figure 4 is a flow chart representation of a method of operating the rake of Figures 2 and 3.

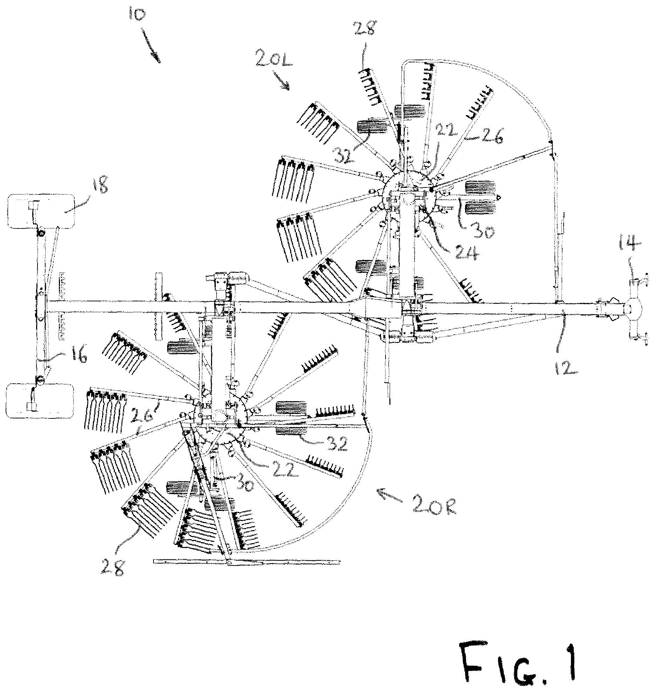

With reference to Figure 1, a twin rotor rake 10 comprises a frame 12 running from front to rear. At the front end of frame 12 a mounting linkage 14 is provided for hitching the rake 10 to the lower links of a tractor three-point linkage (not shown). At the rear end an axle 16 with steerable wheels 18 is pivotally attached to the frame 12.

The rake 10 comprises a pair of working tools in the form of rotors, supported on frame 12 and designated generally at 20L (left-hand rotor) and 20R (right-hand rotor) and which are offset in a fore and aft direction and each define a raking circle that overlaps the longitudinal part of frame 12 . The left-hand rotor 20L comprises a hub 22 mounted to the underside of a gearbox 24 for rotation around a vertical axis. Thirteen tine arms 26 are mounted to, and extend radially from, the hub 22. Crop engaging tines 28 are attached to the outermost ends of each tine arm 26. For clarity, three tines arms and tines are omitted from the left-hand rotor 20L shown in Figure 1. Furthermore, it should be appreciated that more or less tine arms can be employed.

For each rotor 20L, 20R, a rotor running gear includes one or more connected beams 30 carrying ground engaging guide wheels 32 mounted to the underside of the rotor to provide support when travelling across the field during operation. Each hub 22 comprises an electrical or hydraulically actuated mechanism arranged to extend the running gear away from the hub, thereby raising the effective operating height of the rotor relative to the ground, and to retract the running gear towards the hub, lowering the rotor.

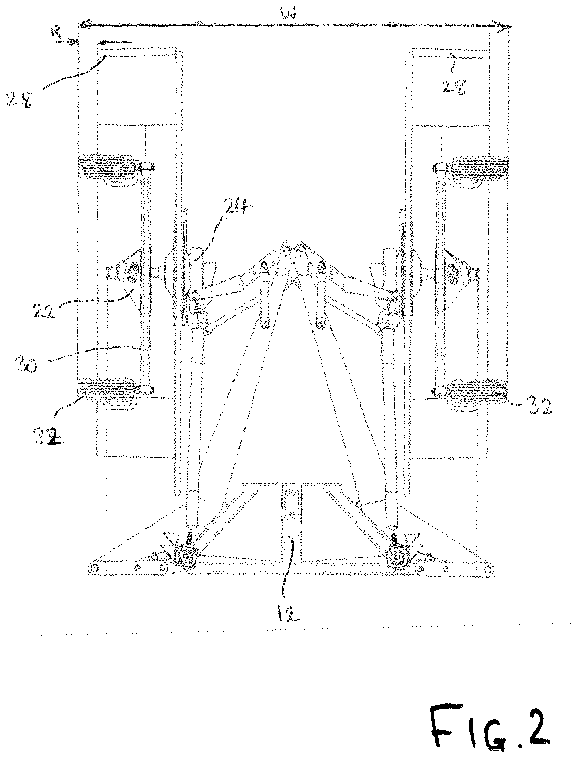

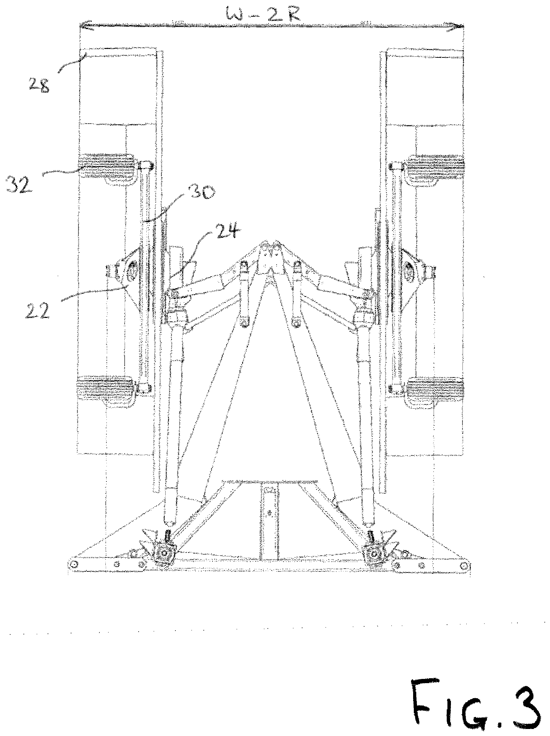

Figures 2 and 3 show the rotors 20L, 20R in a raised position: the axle 16 and steerable wheels 18 are omitted for the sake of clarity. In Figure 2, the ground engaging guide wheels 32 are not retracted, giving an overall width for the rake of W. In Figure 3, the ground engaging wheels 32 have been retracted under control of a control system 34 by an amount R such as to bring them level with the lowest tine position and thus within the generally cylindrical area bounded by the hub tines. With the retraction, the overall width of the rake is reduced to W - 2R. Whilst the overall width W may be acceptable for headland manoeuvres in a field, the reduced width due to retraction may enable the rake to meet the prescribed requirement permitting unescorted road travel thereby reducing manpower and associated costs to the user.

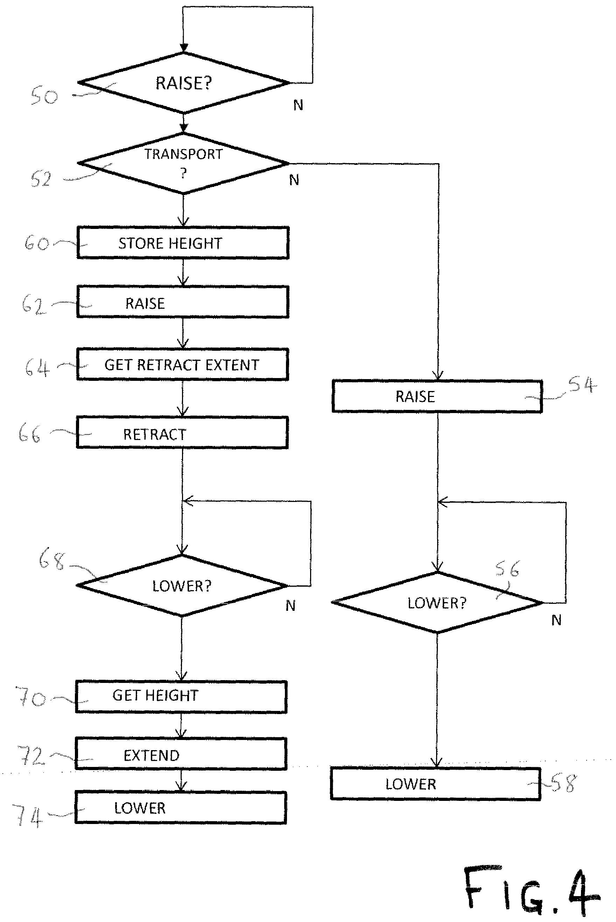

Figure 4 represents a number of fixed and optional steps for operating the rake of Figure 3, which steps are implemented under the direction of the control system 34. In the first step 50, a "raise" command is watched for. Following this, at step 52, a determination is made as to whether the rotors are to be lifted to a road transport position, or are to be raised for some other purpose, such as a headland turn.

If the rotors are not to be raised for road transport, then at step 54 they are raised without retraction of the ground engaging wheels. At step 56, a "lower" command is watched for and, when received, at step 58 the rotors are lowered to operating position resting on the ground engaging wheels.

If the rotors are to be raised for road transport then following step 52 a first optional step 60 may be performed in which the current height setting of the ground engaging wheels is stored, suitably in a memory device associated with the control system. This will be accessed later in step 70 (described below).

At step 62, the rotors are raised to the road transport position. During, or following, the raising, at step 66 the ground engaging wheels are retracted to a position within the area bounded by the tines. Where different extents of retraction are provided for (for example not wholly within the area bounded by the tines but still sufficient to result in a transport width for the rake within permitted limits for unescorted road travel) then an optional step 64 of identifying the desired retraction extent is performed prior to retraction.

At step 68, a "lower" command is watched for. When received, the ground engaging wheels are extended at step 72 and the rotors are lowered at step 74.

Where the optional step 60 has previously been performed, then prior to extending the stored height of the ground engaging wheels is accessed from storage and applied during extension step 72 such that the rotors are returned to their last operating height.

As will be recognised, further variations are possible to the above described method of operation. For example, where the tractor towing the rake is provided with a partially or fully automated guidance system which guides the tractors path in a field, the start and end of a headland manoeuvre may be identified by the guidance system and the steps of raising (step 54) and lowering (step 58) being triggered accordingly. Furthermore, in such an arrangement the guidance system may determine when manoeuvres in a field are completed and automatically trigger the raising to the road transport position and retraction of the ground engaging wheels.

The control system coordinating the raising with retraction and lowering with extension may be fully integrated with implement control and/or guidance systems of the towing tractor, or it may be at least partly provided on the rake itself, suitably coupled with the tractor via an ISOBUS or similar connection. In a far simpler implementation, with corresponding cost reduction, the control system may be provided by a simple sequence control or even a simple mechanical linkage arrangement causing the ground engaging wheels to retract whenever a rotor is raised.

## Claims

1. An agricultural rake (10) comprising a frame (12), ground engaging wheels (18) for supporting the frame (12) on the ground, and at least two rotors (20L, 20R) each of which is driven in rotation about a respective vertical rotor axis and mounted to the frame (12) by a folding linkage that permits folding movement of each rotor between a working position and a raised position around a longitudinal axis;
each rotor (20L, 20R) comprising a hub (22), a plurality of tine arms (26) extending substantially radially from the hub (22) and having crop engaging tines (28) attached to the radially outermost ends thereof, and a rotor running gear comprising at least one ground engaging guide wheel (32) mounted inwardly of the tines below the hub to a height adjustment mechanism;
**characterised in that** the rake further comprises
a control system (34) coupled with each height adjustment mechanism and arranged to automatically retract each ground engaging guide wheel (32) towards its respective hub (22) when the respective rotor (20L, 20R) is moved to the raised position.

2. An agricultural rake (10) as claimed in claim 1, wherein the control system (34) is arranged to automatically retract each ground engaging guide wheel (32) towards its respective hub (22) by an extent such as to bring each guide wheel (32) to within an area bounded by the tines (28) of the respective hub.

3. An agricultural rake (10) as claimed in claim 1, wherein the control system (34) is arranged to automatically retract each ground engaging guide wheel (32) towards its respective hub (22) by an extent such as to result in a predetermined width for the rake (10) with the hubs (22) in the raised position.

4. An agricultural rake (10) as claimed in any of claims 1 to 3, wherein the control system (34) is further arranged to reverse the extent of retraction when the hubs (22) are returned from the raised to the working position.

5. An agricultural rake (10) as claimed in any of claims 1 to 4, wherein each height adjustment mechanism includes a hydraulic cylinder and the control system (34) is configured to control the extent of extension and contraction thereof.

6. An agricultural rake (10) as claimed in any of claims 1 to 4, wherein each height adjustment mechanism includes an electric motor and a mechanism for converting the rotation thereof to extension and retraction of an attached guide wheel (32) under control of the control system (34).

7. A method of operating an agricultural rake (10) having at least two rotors (20L, 20R) each of which is driven in rotation about a respective vertical rotor axis and mounted to a frame (12) by a folding linkage that permits folding movement of each rotor between a working position and a raised position around a longitudinal axis;
wherein each rotor comprises a hub (22), a plurality of tine arms (26) extending substantially radially from the hub with crop engaging tines (28) attached to the radially outermost ends thereof, and a rotor running gear comprising at least one ground engaging guide wheel (32) mounted inwardly of the tines (28) below the hub (22) to a height adjustment mechanism;
**characterised in that** the method comprises automatically retracting each ground engaging guide wheel (32) towards its respective hub (22) when the respective rotor is moved to the raised position.

8. A method as claimed in claim 7, wherein the step of automatically retracting each ground engaging guide wheel (32) towards its respective hub (22) when the respective rotor is moved to the raised position comprises retracting by an extent such as to bring each guide wheel (32) to within an area bounded by the tines (28) of the respective hub.

9. A method as claimed in claim 7, wherein the step of automatically retracting each ground engaging guide wheel (32) towards its respective hub (22) when the respective rotor is moved to the raised position comprises retracting by an extent such as to result in a predetermined width for the rake with the hubs (22) in the raised position.

10. A method as claimed in any of claims 7 to 9, further comprising reversing the extent of retraction when the hubs (22) are returned from the raised to the working position.

11. A method as claimed in any of claims 7 to 10, wherein two raised positions are defined, one for road transport of the rake (10) and one for performing headland manoeuvres in a field, and wherein the retraction of guide wheels (32) is not performed during headland manoeuvres.

## Patentansprüche

1. Landwirtschaftliche Rake (10), mit einem Rahmen (12), den Boden berührenden Rädern (18) zum Abstützen des Rahmens (12) auf dem Boden und mindestens zwei Rotoren (20L, 20R), die jeweils um eine entsprechende vertikale Rotorachse drehend angetrieben und mittels einer Klappverbindung an dem Rahmen (12) montiert sind, wobei die Klappverbindung eine Klappbewegung jedes der Rotoren um eine Längsachse zwischen einer Arbeitsstellung und einer angehobenen Stellung gestattet;
wobei jeder Rotor (20L, 20R) eine Nabe (22), eine Mehrzahl von Zinkenarmen (46), die sich im Wesentlichen radial von der Nabe (22) erstrecken und das Erntegut berührende Zinken (28) besitzen, die mit deren radial äußersten Enden verbunden sind, und ein Rotorfahrwerk aufweist, welches mindestens ein den Boden berührendes Führungsrad (32) aufweist, das von den Zinken nach innen unterhalb der Nabe an einem Höheneinstellmechanismus montiert ist;
**dadurch gekennzeichnet, dass** die Rake weiterhin Folgendes aufweist:
ein Steuer-/Regelsystem (34), das mit jedem Höheneinstellmechanismus verbunden und so angeordnet ist, dass es jedes den Boden berührende Führungsrad (32) in Richtung seiner entsprechenden Nabe (22) automatisch zurückzuzieht, wenn der entsprechende Rotor (20L, 20R) in die angehobene Stellung bewegt wird.

2. Landwirtschaftliche Rake (10) nach Anspruch 1, wobei das Steuer-/Regelsystem (34) so angeordnet ist, dass es jedes den Boden berührende Führungsrad (32) in Richtung seiner entsprechenden Nabe (22) derart automatisch zurückzieht, dass jedes Führungsrad (32) in einen Bereich gebracht wird, der durch die Zinken (28) der entsprechenden Nabe begrenzt ist.

3. Landwirtschaftliche Rake (10) nach Anspruch 1, wobei das Steuer-/Regelsystem (34) so angeordnet ist, dass es jedes den Boden berührende Führungsrad (32) in Richtung seiner entsprechenden Nabe (22) derart automatisch zurückzieht, dass sich eine vorbestimmte Breite der Rake (10) mit den Naben (22) in der angehobenen Stellung ergibt.

4. Landwirtschaftliche Rake (10) nach einem der Ansprüche 1 bis 3, wobei das Steuer-/Regelsystem (34) weiterhin so angeordnet ist, dass das Ausmaß des Zurückziehens umgekehrt wird, wenn die Naben (22) von der angehobenen Stellung in die Arbeitsstellung zurückkehren.

5. Landwirtschaftliche Rake (10) nach einem der Ansprüche 1 bis 4, wobei jeder Höheneinstellmechanismus einen Hydraulikzylinder aufweist und das Steuer-/Regelsystem (34) konfiguriert ist, um das Ausmaß des Ausfahrens und des Einfahrens zu steuern/regeln.

6. Landwirtschaftliche Rake (10) nach einem der Ansprüche 1 bis 4, wobei jeder Höheneinstellmechanismus einen elektrischen Motor und einen Mechanismus zum Umsetzen dessen Drehung in ein Ausfahren und ein Einfahren des Führungsrads (32) unter Steuerung/Regelung durch das Steuer-/Regelsystem (34) aufweist.

7. Verfahren zum Betreiben einer landwirtschaftlichen Rake (10) mit mindestens zwei Rotoren (20L, 20R), die jeweils um eine entsprechende vertikale Rotorachse drehend angetrieben und mittels einer Klappverbindung an dem Rahmen (12) montiert sind, wobei die Klappverbindung eine Klappbewegung jedes der Rotoren um eine Längsachse zwischen einer Arbeitsstellung und einer angehobenen Stellung gestattet;
wobei jeder Rotor (20L, 20R) eine Nabe (22), eine Mehrzahl von Zinkenarmen (46), die sich im Wesentlichen radial von der Nabe (22) erstrecken und das Erntegut berührende Zinken (28) besitzen, die mit deren radial äußersten Enden verbunden sind, und ein Rotorfahrwerk aufweist, welches mindestens ein den Boden berührendes Führungsrad (32) aufweist, das von den Zinken nach innen unterhalb der Nabe an einem Höheneinstellmechanismus montiert ist;
**dadurch gekennzeichnet, dass** das Verfahren das automatische Zurückziehen jedes der den Boden berührenden Führungsräder (32) in Richtung seiner entsprechenden Nabe (22) aufweist, wenn der entsprechende Rotor (20L, 20R) in die angehobene Stellung bewegt wird.

8. Verfahren nach Anspruch 7, wobei der Schritt des automatischen Zurückziehens jedes der den Boden berührenden Führungsräder (32) in Richtung seiner entsprechenden Nabe (22), wenn der entsprechende Rotor (20L, 20R) in die angehobene Stellung bewegt wird, das Zurückziehen derart aufweist, dass jedes Führungsrad (32) in einen Bereich gebracht wird, der durch die Zinken (28) der entsprechenden Nabe begrenzt ist.

9. Verfahren nach Anspruch 7, wobei der Schritt des automatischen Zurückziehens jedes der den Boden berührenden Führungsräder (32) in Richtung seiner entsprechenden Nabe (22), wenn der entsprechende Rotor (20L, 20R) in die angehobene Stellung bewegt wird, das Zurückziehen derart aufweist, dass sich eine vorbestimmte Breite der Rake mit den Naben (22) in der angehobenen Stellung ergibt.

10. Verfahren nach einem der Ansprüche 7 bis 9, weiterhin mit dem Umkehren des Ausmaßes des Zurückziehens, wenn die Naben (22) von der angehobenen Stellung in die Arbeitsstellung zurückkehren.

11. Verfahren nach einem der Ansprüche 7 bis 10, wobei zwei angehobene Stellungen vorhanden sind, von denen eine für den Straßentransport der Rake (10) und eine zum Ausführen von Feldrand-Manövern auf einem Feld dient, und wobei das Zurückziehen der Führungsräder (32) nicht während des Ausführens der Feldrand-Manöver ausgeführt wird.

## Revendications

1. Râteau agricole (10) comprenant un bâti (12), des roues couplées au sol (18) destinées à supporter le bâti (12) sur le sol, et au moins deux rotors (20L, 20R), chacun d'eux étant entraîné en rotation autour d'un axe de rotor vertical respectif et monté sur le bâti (12) par une liaison articulée qui permet un mouvement articulé de chaque rotor entre une position de travail et une position relevée autour d'un axe longitudinal ;
chaque rotor (20L, 20R) comprenant un moyeu (22), une pluralité de bras porte-dents (26) s'étendant sensiblement radialement à partir du moyeu (22) et comportant des dents de couplage de culture (28) fixées sur les extrémités radialement à l'extérieur de ceux-ci, et un engrenage d'entraînement de rotor comprenant au moins une roue de guidage couplée au sol (32) montée vers l'intérieur des dents au-dessous du moyeu sur un mécanisme de réglage de hauteur ;
**caractérisé en ce que** le râteau comprend en outre :
un dispositif de commande (34) couplé à chaque mécanisme de réglage de hauteur et agencé afin de rétracter automatiquement chaque roue de guidage couplée au sol (32) vers son moyeu respectif (22) lorsque le rotor respectif (20L, 20R) est déplacé vers la position relevée.

2. Râteau agricole (10) selon la revendication 1, dans lequel le dispositif de commande (34) est agencé afin de rétracter automatiquement chaque roue de guidage couplée au sol (32) vers son moyeu respectif (22) avec un tel déplacement que chaque roue de guidage (32) est amenée à l'intérieur d'une zone bordée par les dents (28) du moyeu respectif.

3. Râteau agricole (10) selon la revendication 1, dans lequel le dispositif de commande (34) est agencé afin de rétracter automatiquement chaque roue de guidage couplée au sol (32) vers son moyeu respectif (22) sur une distance permettant d'assurer une largeur prédéterminée du râteau (10) avec les moyeux (22) dans la position relevée.

4. Râteau agricole (10) selon l'une quelconque des revendications 1 à 3, dans lequel le dispositif de commande (34) est en outre agencé de manière à inverser la plage de retrait lorsque les moyeux (22) sont ramenés de la position relevée à la position de travail.

5. Râteau agricole (10) selon l'une quelconque des revendications 1 à 4, dans lequel chaque mécanisme de réglage de hauteur comporte un vérin hydraulique et le dispositif de commande (34) est configuré de manière à commander la plage d'extension et de contraction de ce dernier.

6. Râteau agricole (10) selon l'une quelconque des revendications 1 à 4, dans lequel chaque mécanisme de réglage de hauteur comporte un moteur électrique et un mécanisme destiné à transformer la rotation de ce dernier en extension et retrait d'une roue de guidage fixée (32) sous le contrôle du dispositif de commande (34).

7. Procédé de commande d'un râteau agricole (10) comportant au moins deux rotors (20L, 20R), chacun d'eux est entraîné en rotation autour d'un axe de rotor vertical respectif et monté sur un bâti (12) par une liaison articulée qui permet le mouvement articulé de chaque rotor entre une position de travail et une position relevée autour d'un axe longitudinal ;
dans lequel chaque rotor comprend un moyeu (22), une pluralité de bras porte-dents (26) s'étendant sensiblement radialement à partir du moyeu, les dents de couplage de culture (26) étant fixées sur les extrémités radialement à l'extérieur de celui-ci, et un engrenage d'entraînement de rotor comprenant au moins une roue de guidage couplée au sol (32) montée vers l'intérieur des dents (28) au-dessous du moyeu (22) sur un mécanisme de réglage de hauteur ;
**caractérisé en ce que** le procédé comprend le retrait automatique de chaque roue de guidage couplée au sol (32) vers son moyeu respectif (22) lorsque le rotor respectif est déplacé vers la position relevée.

8. Procédé selon la revendication 7, dans lequel l'étape de retrait automatique de chaque roue de guidage couplée au sol (32) vers son moyeu respectif (22) lorsque le rotor respectif est déplacé vers la position relevée, comprend le retrait sur une distance permettant d'amener chaque roue de guidage (32) à l'intérieur d'une zone bordée par les dents (25) du moyeu respectif.

9. Procédé selon la revendication 7, dans lequel l'étape de retrait automatique de chaque roue de guidage couplée au sol (32) vers son moyeu (22) respectif lorsque le rotor respectif est déplacé vers la position relevée, comprend le retrait sur une distance permettant d'assurer une largeur prédéterminée du râteau avec les moyeux (22) dans la position relevée.

10. Procédé selon l'une quelconque des revendications 7 à 9, comprenant en outre l'inversion de la plage de retrait lorsque les moyeux (22) sont ramenés de la position relevée à la position de travail.

11. Procédé selon l'une quelconque des revendications 7 à 10, dans lequel deux positions relevées sont définies, une pour le transport routier du râteau (10) et une destinée à exécuter des manoeuvres en tête de champ dans un champ, et dans lequel le retrait des roues de guidage (32) n'est pas réalisé en cours de manoeuvres en tête de champ.
